(19) 

**Europäisches Patentamt**
**European Patent Office**
**Office européen des brevets**

(11) **EP 4 469 978 B1**

(12) **EUROPEAN PATENT SPECIFICATION**

(45) Date of publication and mention
of the grant of the patent:
**01.07.2026 Bulletin 2026/27**

(21) Application number: **23710291.8**

(22) Date of filing: **07.03.2023**

(51) International Patent Classification (IPC):
**G06V 10/44** *(2022.01)*   **G06V 10/50** *(2022.01)*
**G06V 10/82** *(2022.01)*   **G06V 20/40** *(2022.01)*
**G06T 7/20** *(2017.01)*   **G06N 3/0464** *(2023.01)*
**G06N 3/084** *(2023.01)*   **G06N 3/09** *(2023.01)*

(52) Cooperative Patent Classification (CPC):
**G06V 10/82; G06N 3/0464; G06N 3/084;**
**G06N 3/09; G06T 7/20; G06V 10/454; G06V 10/50;**
**G06V 20/46;** G06N 3/048; G06N 3/0895;
G06N 3/092; G06T 2207/20081; G06T 2207/20084

(86) International application number:
**PCT/EP2023/055758**

(87) International publication number:
**WO 2023/170070 (14.09.2023 Gazette 2023/37)**

(54) **TRACKING QUERY POINTS IN VIDEOS USING NEURAL NETWORKS**

VERFOLGUNG VON ABFRAGEPUNKTEN IN VIDEOS UNTER VERWENDUNG NEURONALER
NETZE

SUIVI DE POINTS D'INTERROGATION DANS DES VIDÉOS FAISANT APPEL À DES RÉSEAUX
NEURONAUX

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **07.03.2022 US 202263317535 P**

(43) Date of publication of application:
**04.12.2024 Bulletin 2024/49**

(73) Proprietor: **GDM Holding LLC**
**Mountain View, CA 94043 (US)**

(72) Inventors:
• **DOERSCH, Carl**
**London N1C 4AG (GB)**
• **GUPTA, Ankush**
**London N1C 4AG (GB)**
• **MARKEEVA, Larisa**
**London N1C 4AG (GB)**
• **GREFF, Klaus**
**London N1C 4AG (GB)**
• **TAGLIASACCHI, Andrea**
**Toronto, Ontario M5H 2G4 (CA)**

• **RECASENS CONTINENTE, Adrià**
**London N1C 4AG (GB)**
• **AYTAR, Yusuf**
**London N1C 4AG (GB)**
• **CARREIRA, Joao**
**London N1C 4AG (GB)**
• **ZISSERMAN, Andrew**
**London N1C 4AG (GB)**
• **YANG, Yi**
**London N1C 4AG (GB)**

(74) Representative: **Marks & Clerk GST**
**1 New York Street**
**Manchester M1 4HD (GB)**

(56) References cited:
• **SU LIHUI ET AL: "Siamese Network-Based All-**
**Purpose-Tracker, a Model-Free Deep Learning**
**Tool for Animal Behavioral Tracking",**
**FRONTIERS IN BEHAVIORAL NEUROSCIENCE,**
**vol. 16, 4 March 2022 (2022-03-04), pages**
**759943.1, XP093043970, DOI: 10.3389/**
**fnbeh.2022.759943**

**(Cont. next page)**

EP 4 469 978 B1

- JIANG WEI ET AL: "COTR: Correspondence Transformer for Matching Across Images", 2021 IEEE/CVF INTERNATIONAL CONFERENCE ON COMPUTER VISION (ICCV), IEEE, 10 October 2021 (2021-10-10), pages 6187 - 6197, XP034093172, DOI: 10.1109/ICCV48922.2021.00615
- DANIEL DETONE ET AL: "Toward Geometric Deep SLAM", ARXIV.ORG, 24 July 2017 (2017-07-24), Cornell University Library, Ithaca, NY 14853, XP055554935, Retrieved from the Internet <URL:https://arxiv.org/pdf/1707.07410.pdf> [retrieved on 20190211]
- CARL DOERSCH ET AL: "TAP-Vid: A Benchmark for Tracking Any Point in a Video", ARXIV.ORG, CORNELL UNIVERSITY LIBRARY, ITHACA, NY 14853, 7 November 2022 (2022-11-07), XP091362943

**Description**

CROSS-REFERENCE TO RELATED APPLICATION

This application claims priority to U.S. Provisional Application No. 63/317,535, filed on March 7, 2022.

BACKGROUND

This specification relates to processing inputs that include video frames using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

SU LIHUI ET AL: "Siamese Network-Based All-Purpose-Tracker, a Model-Free Deep Learning Tool for Animal Behavioral Tracking", FRONTIERS IN BEHAVIORAL NEUROSCIENCE, vol. 16, 4 March 2022 (2022-03-04), page 759943.1, DOI: 10.3389/fnbeh.2022.759943 discloses a Siamese Network-based All-Purpose Tracker (SNAP-Tracker) which provides a general solution to behavioral tracking.

JIANG WEI ET AL: "COTR: Correspondence Transformer for Matching Across Images", 2021 IEEE/CVF INTERNATIONAL CONFERENCE ON COMPUTER VISION (ICCV), IEEE, 10 October 2021 (2021-10-10), pages 6187-6197, DOI: 10.1109/ICCV48922.2021.00615 discloses a framework for finding correspondences in images based on a deep neural network that, given two images and a query point in one of them, finds its correspondence in the other.

SUMMARY

This specification describes a system implemented as computer programs on one or more computers in one or more locations that processes an input that includes (i) a video sequence that includes a plurality of video frames and (ii) a set of one or more query points.

Each query point is a point in a corresponding one of the video frames, i.e., that specifies a respective spatial position, i.e., a respective pixel, in a corresponding one of the plurality of video frames.

The system processes the set of one or more query points and the video sequence, i.e., the intensity values of the pixels of the video frames in the video sequence, using a point tracking neural network to generate a network output that includes, for each query point, a respective predicted spatial position of the query point in the other video frames in the sequence, i.e., in the video frames other than the corresponding video frame for the query point.

In one aspect, a method includes obtaining a video sequence comprising a plurality of video frames; obtaining a set of one or more query points, each query point specifying a respective spatial position in a corresponding one of the plurality of video frames; and processing the set of one or more query points and the video sequence using a point tracking neural network to generate a network output that comprises, for each query point, a respective predicted spatial position of the query point in each of the video frames in the sequence other than the corresponding video frame for the query point.

Processing the set of one or more query points and the video sequence using a point tracking neural network to generate a network output that comprises, for each query point, a respective predicted spatial position of the query point in each of the video frames in the sequence other than the corresponding video frame for the query point comprises: processing the video frames in the video sequence using a visual backbone neural network to generate a feature grid that includes a respective visual feature for each of a plurality of spatial locations in each of the video frames; for each query point: generating an extracted feature for the query point from the spatial position of the query point in the corresponding video frame and the respective visual features for one or more of the plurality of spatial locations in the corresponding video frame; and generating the respective predicted spatial position of the query point in each of the video frames other than the corresponding video frame from the feature grid and the extracted feature for the query point.

In some implementations, generating an extracted feature for the query point from the spatial position of the query point in the corresponding video frame and the respective visual features for each of the plurality of spatial locations in the corresponding video frame comprises: performing an interpolation of the visual features of a set of spatial locations that are within a local neighborhood of the respective spatial position of the query in the corresponding video frame.

Generating the respective predicted spatial position of the query point in each of the video frames other than the corresponding video frame from the feature grid and the extracted feature for the query point comprises: generating a cost volume from the feature grid and the extracted feature for the query point; and processing the cost volume using a decoder neural network to generate, for each of the video frames other than the corresponding video frame, the respective predicted position of the query point in the video frame.

Processing the cost volume using the decoder neural network comprises: processing the cost volume using the decoder neural network to generate, for each of the plurality of video frames other than the corresponding video frame, a respective score for each spatial location in the video frame; and for each of the plurality of video frames other than the corresponding video frame, generating the predicted position from the respective scores for the spatial locations in the video frame.

In some implementations, generating the predicted position from the respective scores comprises: identifying the spatial location with the highest score; identifying each spatial location that is within a fixed size window of the spatial location with the highest score; and determining the predicted position by computing a weighted sum of the spatial locations within the fixed sized window of the spatial location with the highest score, wherein the weight for each spatial location is computed based on the score for the spatial location and a sum of the scores for the spatial locations within the fixed size window.

The network output further comprises, for each query point, a respective occlusion score for the query point for each of the one video frames other than the corresponding video frame that represents a likelihood that the query point is occluded in the video frame.

Processing the cost volume using a decoder neural network to generate the respective predicted position of the query point comprises:

processing the cost volume using the decoder neural network to generate, for each video frame other than the corresponding video frame, the respective predicted position of the query point in the video frame and the respective occlusion score for the query point in the video frame.

In another aspect, a method of training the point tracking neural network comprises: obtaining a batch of one or more training video sequences; obtaining, for each training video sequence and each query point in a set of query points for the training video sequence, (i) a ground truth spatial position of the query point in each of the video frames in the training video sequence and (ii) a respective ground truth occlusion score for the query point for each of the video frames in the training video sequence; for each training video sequence, processing the set of one or more query points for the training video sequence and the training video sequence using the point tracking neural network to generate, for each query point, a respective predicted spatial position of the query point in each of the video frames in the training video sequence and a respective occlusion score for the query point for each of the video frames in the training video sequence; computing gradients with respect to the parameters of the point tracking neural network of a loss function that includes: (i) a first loss term that measures, for each training video sequence, errors between ground truth spatial positions of the query points and corresponding predicted spatial positions of the query points, and (ii) a second loss term that measures, for each training video sequence, errors between ground truth occlusion scores for query points and corresponding predicted occlusion scores for the query points.

In some implementations, the first loss term is a Huber loss.

In some implementations, the second loss term is a cross-entropy loss.

In some implementations, the loss function also includes: (iii) a contrastive learning loss term.

In some implementations, the method further comprises: for each of one or more of the training video sequences, generating the ground truth spatial position of the query point in each of the video frames in the training video sequence and the respective ground truth occlusion score for the query point for each of the video frames, comprising: obtaining another training video sequence that is a variation of the training video sequence; processing the set of one or more query points and the other training video sequence using the point tracking neural network to generate, for each query point, a respective predicted spatial position of the query point in each of the video frames in the other training video sequence and a respective occlusion score for the query point for each of the video frames in the other training video sequence; and generating the ground truth spatial positions of the query points in each of the video frames in the training video sequence and the respective ground truth occlusion scores for the query points for each of the video frames from data generated by the point tracking neural network while processing the set of one or more query points and the other training video sequence using the point tracking neural network.

In some implementations, generating the ground truth spatial position of the query points in each of the video frames in the training video sequence and the respective ground truth occlusion score for the query points for each of the video frames from data generated by the point tracking neural network while processing the set of one or more query points and the other training video sequence using the point tracking neural network comprises: processing the data generated by the point tracking neural network while processing the set of one or more query points and the other training video sequence using the point tracking neural network using a predictor neural network.

In some implementations. the predictor neural network is a multi-layer perceptron (MLP).

In some implementations, the training video sequence and the other training video sequence have been generated from a same original training video sequence by applying different data augmentations to the original training video sequence.

In some implementations, the data generated by the point tracking neural network while processing the set of one or more query points and the other training video sequence using the point tracking neural network comprises: (i) the respective predicted spatial positions of the query points in the video frames in the other training video sequence, and (ii) the respective occlusion scores for the query points for each of the video frames in the other training video sequence.

In some implementations, the method further comprises: training the point tracking neural network using the computed gradients.

The subject matter described in this specification can be implemented in particular embodiments so as to realize one or more of the following advantages.

This specification describes a neural network that performs tracking of arbitrary query points across a video. This processes low level features (such as pixel attributes) within the frames of the video. This can provide information about, e.g., how object surfaces of objects depicted in the video deform and move during the video. Such information can be useful for a variety of downstream tasks, e.g., video understanding or robotics tasks. Moreover, the neural network can predict when points become occluded, providing for more fine-grained occlusion tracking.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 is a diagram of an example video processing system.
FIG. 2 is a flow diagram of an example process for tracking a query point through a video.
FIG. 3 shows an example of the generation of a cost volume for a query point.
FIG. 4 shows an example of predicting position and occlusion from a cost volume for a given video frame.
FIG. 5 is a flow diagram of an example process for training the point tracking neural network.

Like reference numbers and designations in the various drawings indicate like elements.

DETAILED DESCRIPTION

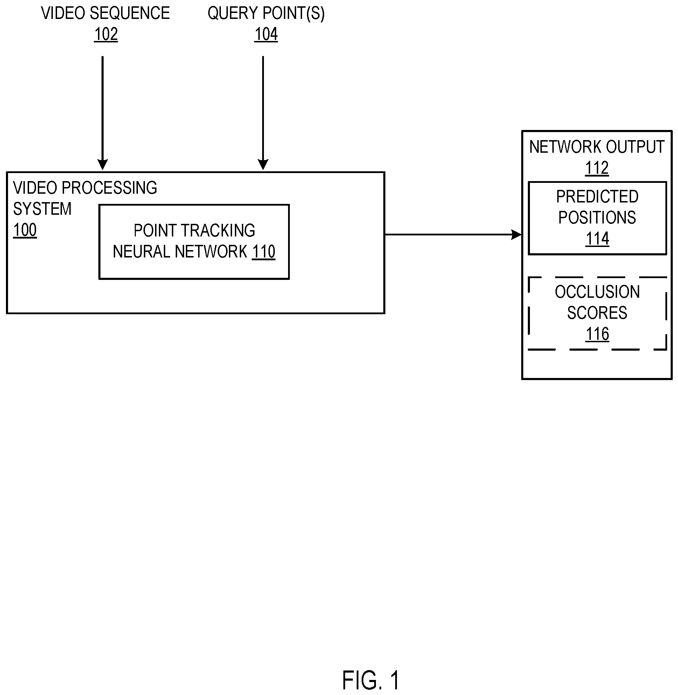

FIG. 1 is a diagram of an example video processing system 100. The video processing system 100 is an example of a system implemented as computer programs on one or more computers in one or more locations, in which the systems, components, and techniques described below can be implemented.

The system 100 receives an input that includes (i) a video sequence 102 that includes a plurality of video frames and (ii) a set of one or more query points 104.

Each query point 104 is a point in a corresponding one of the video frames, i.e., that specifies a respective spatial position, i.e., a respective pixel, in a corresponding one of the plurality of video frames. Thus, each query point 104 can be represented as a point $(x, y, t)$, where $x, y$ are the spatial coordinates of the query point 104 and $t$ is the index of the corresponding video frame in the video sequence 102.

The system 100 processes the set of one or more query points 104 and the video sequence 102, i.e., the intensity values of the pixels of the video frames in the video sequence 102, using a point tracking neural network 110 to generate a network output 112 that includes, for each query point 104, a respective predicted spatial position 114 of the query point 104 in the other video frames in the sequence 102, i.e., in the video frames other than the corresponding video frame $t$ for the query point 104. Because of the architecture of the neural network 110 or because of the design of the processing pipeline for generating outputs using the neural network 110, the network output 112 can also include a predicted spatial position for the corresponding video frame. However, in some of these cases, the system 100 can disregard the predicted spatial position for the corresponding video frame (because the actual position in the corresponding video frame is provided as input to the system).

That is, given a query point 104 in one of the video frames, the point tracking neural network 110 can generate a prediction of the spatial position of the query point 104 in the other video frames in the video frame.

The predicted position of a given query point in a given other video frame is a prediction of the location of the portion of the scene that was depicted at the given query point in the corresponding video frame. For example, if, at the given query point, the corresponding video frame depicted a particular point on a surface of an object in the scene, the predicted position of the given query point identifies the predicted position of the same particular point on the surface of the object in the given other video frame. More generally, if the video is a video of the real world, each query point corresponds to a physical point in the world that was depicted at the query point in the corresponding video and the predicted position of a given query point in a given video frame is a prediction of the location of the physical point in the world in the given video frame, i.e., a prediction of which pixel depicts physical point in the world in the given video frame.

In some implementations, the point tracking neural network 110 also generates, for each query point 104, a respective occlusion score 116 for the query point 104 for each of the other video frames in the sequence 102. That is, the network output 112 includes both a predicted position 114 and an occlusion score 116.

The occlusion score 116 for a given query point in a given video frame represents the likelihood that query point is occluded, e.g., not visible, in the given video frame, i.e., that the portion of the scene that was depicted at the query point in the corresponding video frame is occluded in the given video frame (e.g. by another object within the scene). For example, if the video is a video of the real world, the occlusion score for a given query point in a given video frame is a predicted likelihood that the corresponding physical point in the world is occluded in the given video frame (e.g. by another object in the real world).

Because of the architecture of the neural network 110 or because of the design of the processing pipeline, the network output 112 can also include a predicted occlusion score 116 for the corresponding video frame. However, in some of these cases, the system 100 can disregard the occlusion score for the corresponding video frame.

The predicted positions 114 (and optionally the occlusion scores 116) can be used for any of a variety of purposes.

For example, the predicted positions 114 can be used to generate a reward signal for training a robot or other agent through reinforcement learning, e.g., if the task being performed by the agent requires moving a point in the scene from one location to another, the distance between the predicted position of the point in the last video frame in the sequence and the target location can be used to generate a reward.

As another example, the predicted positions 114 (and optionally the occlusion scores 116) can be provided as an additional input to a policy neural network for controlling a robot or other agent interacting with an environment. In this example, the query points can be points of interest in the last frame of the video sequence, and the predictions for the earlier frames in the sequence can be provided as input to the policy neural network, e.g., to provide a signal as to the recent motion of the agent or of other objects in the environment.

As another example, the predicted positions 114 (and optionally the occlusion scores 116) can be provided, along with the video sequence 102, as input to a video understanding neural network, e.g., an action classification neural network or a topic classification neural network, to provide additional information to the video understanding neural network regarding motion in the scene.

As another example, the predicted positions 114 (and optionally the occlusion scores 116) can be used for imitation learning, i.e., to enable the imitation of motion rather than appearance.

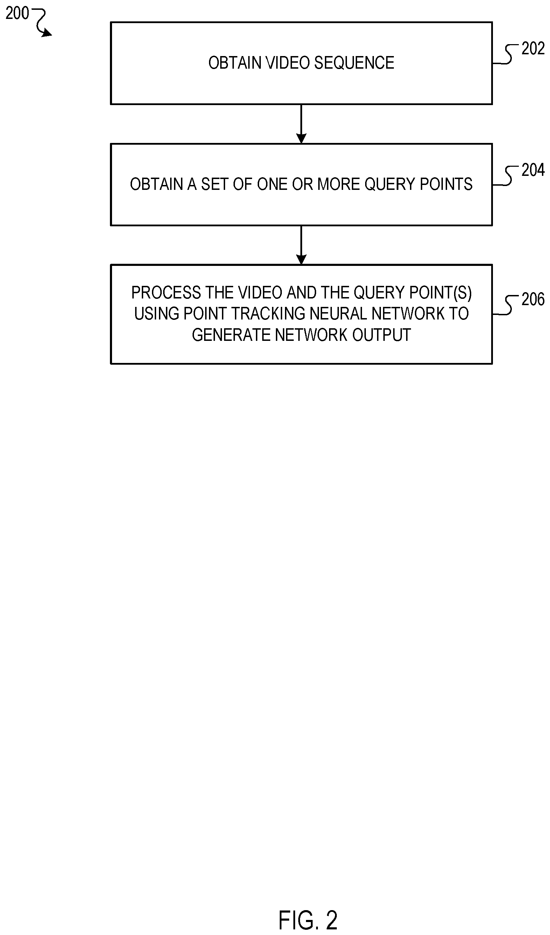

FIG. 2 is a flow diagram of an example process 200 for tracking query points through a video sequence. For convenience, the process 200 will be described as being performed by a system of one or more computers located in one or more locations. For example, a video processing system, e.g., the video processing system 100 depicted in FIG. 1, appropriately programmed in accordance with this specification, can perform the process 200.

The system obtains a video sequence that includes a plurality of video frames (step 202). For example, the video sequence can depict a real-world or synthetic scene across a time window, with each video frame depicting the scene at a corresponding point in the time window. Each video frame can include a plurality of pixels, with each pixel having one or more intensity values, e.g., RGB color values, a greyscale value, or one or more intensity values in a different color representation scheme. Each pixel may be associated with a corresponding spatial position within the video frame. Each pixel may represent a corresponding portion or point of a scene (e.g. a real-world or synthetic scene) depicted by the video frame at the corresponding point in time for the video frame.

The system obtains a set of one or more query points (step 204). As described above, each query point specifies a respective spatial position in a corresponding one of the plurality of video frames.

The system processes the set of one or more query points and the video sequence using a point tracking neural network to generate a network output (step 206).

The network output includes, for each query point, a respective predicted spatial position of the query point in each of the video frames in the sequence other than the corresponding video frame for the query point.

Optionally, the network output can also include, for each query point, a respective occlusion score for the query point for each of the one video frames other than the corresponding video frame that represents a likelihood that the query point is occluded in the video frame.

The point tracking neural network can generally have any appropriate architecture that allows the point tracking neural network to map the video sequence and a query point to a network output for the query point.

As a particular example, the point tracking neural network can include a visual backbone neural network. Generally, a visual backbone neural network is a feature-extracting neural network, that is, a neural network configured to extract features from an input (e.g. a video frame).

In this example, the system can process the video frames in the video sequence using the visual backbone neural network to generate a feature grid that includes a respective visual feature for each of a plurality of spatial locations in each of the video frames.

For each query point, the system can then generate an extracted feature for the query point from the spatial position of the query point in the corresponding video frame and the respective visual features for one or more of the plurality of spatial locations in the corresponding video frame and then generate the respective predicted spatial position and, optionally, the occlusion score of the query point in each of the video frames other than the corresponding video frame from the feature grid and the extracted feature for the query point.

As one example, the point tracking neural network can also include a decoder neural network.

In this example, the system can generate a cost volume from the feature grid and the extracted feature for the query point and then process the cost volume using the decoder neural network to generate, for each of the video frames other than the corresponding video frame, the respective predicted position of the query point in the video frame and, optionally, the occlusion score.

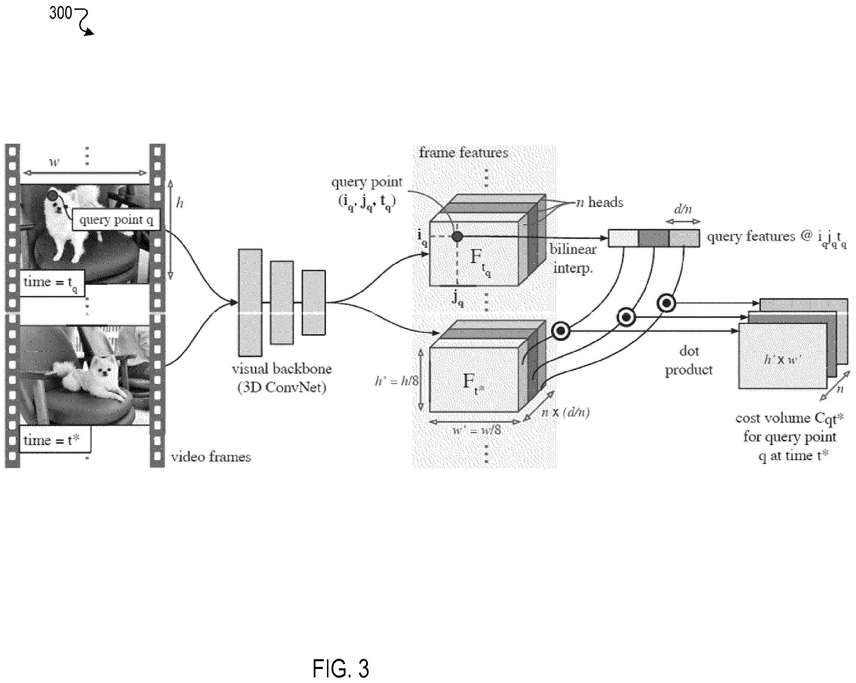

An example of generating the cost volume is described below with reference to FIG. 3.

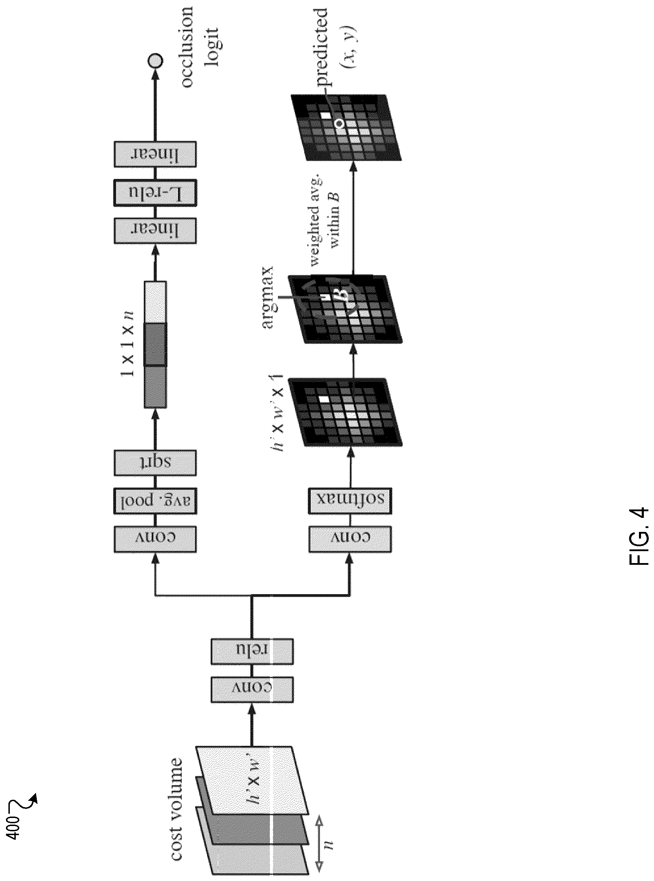

An example of processing the cost volume using the decoder neural network to generate the respective predicted position of the query point in a given video frame and the occlusion score for the given video frame is described below with reference to FIG. 4.

FIG. 3 shows an example 300 of the generation of a cost volume for a query point.

In particular, in the example of FIG. 3, the system processes a sequence of $w$ x $h$ video frames and receives a query point $(i_q, j_q, t_q)$ in a video frame $t_q$.

As described above, the system processes the video frames in the video sequence using a visual backbone neural network to generate a feature grid that includes a respective visual feature, i.e., a feature vector, for each of a plurality of spatial locations in each of the video frames. Generally, each of the spatial locations corresponds to a different region of the video frame. For example, the feature grid can be an $w/8$ x $h/8$ grid of $d$ dimensional visual features, with each visual feature corresponding to an 8 x 8 grid of pixels from the corresponding video frame.

The visual backbone neural network can have any appropriate architecture that allows the neural network to map the video sequence to a feature grid. In the example of FIG. 3, the visual backbone neural network is a 3D convolutional neural network (ConvNet), e.g., a TSM-ResNet-18 or other appropriate convolutional neural network. In other examples, the visual backbone neural network can be a different type of neural network, e.g., a vision Transformer neural network.

For each query point, the system can then generate an extracted feature for the query point from the spatial position of the query point in the corresponding video frame and the respective visual features for one or more of the plurality of spatial locations in the corresponding video frame.

As shown in FIG. 3, the system can generate the extracted feature ("query features") by performing an interpolation, e.g., a bilinear interpolation, of the visual features of a set of spatial locations that are within a local neighborhood of the respective spatial position $(i_q, j_q)$ of the query in the corresponding video frame $t_q$.

The system then generates a cost volume from the feature grid and the extracted feature for the query point.

In some implementations, to generate the cost volume from the from the feature grid and the extracted feature for the query point, the system can divide the visual features in the feature grid and the extracted feature into $n$ heads, i.e., so that the extracted feature includes a respective $d/n$ dimensional feature for each of the $n$ heads and the feature grid includes respective $d/n$ dimensional visual features for each head.

The system can then generate a respective initial cost volume for each head and concatenate the initial cost volumes to generate the final cost volume. By using multiple heads, i.e., by computing a multi-headed cost volume, the system can generate a substantially richer feature for further processing, i.e., for use in predicting the positions and the occlusion scores.

The initial cost volume for a given head has a respective cost value for each spatial location in each of the video frames. That is, the initial cost volume for the given head includes an h' x w' x 1 grid of cost values for each video frame in the sequence.

To compute the cost value for a given spatial location in a given video frame, the system computes a dot product between the extracted feature for the head and the visual feature for the head for the given spatial location in the given video frame.

In some other implementations, the system directly computes the final cost volume by computing dot products between the extracted feature and the visual features without dividing the extracted feature and the visual features into heads. That is, the system uses $n = 1$ heads when performing the above operations. In these implementations, the system directly computes a final cost volume that has a respective cost value for each spatial location in each of the video frames. That is, the final cost volume includes an h' x w' x 1 grid of cost values for each video frame in the sequence. To compute the cost value for a given spatial location in a given video frame, the system computes a dot product between the extracted feature and the visual feature for the given spatial location in the given video frame.

As described above, the system can then process the cost volume using the decoder neural network to generate, for each of the video frames other than the corresponding video frame, the respective predicted position of the query point in the video frame and, optionally, the occlusion score.

FIG. 4 shows an example 400 of predicting position and occlusion from a cost volume for a given video frame.

Generally, to generate the predicted positions, the system can process the cost volume using the decoder neural network to generate, for each of the plurality of video frames other than the corresponding video frame, a respective score for each spatial location in the video frame.

For each of the plurality of video frames other than the corresponding video frame, the system can then generate the predicted position from the respective scores for the spatial locations in the video frame.

When the system also predicts occlusion, as in the example of FIG. 4, the system can process the cost volume using the decoder neural network to generate, for each video frame other than the corresponding video frame, the respective predicted position of the query point in the video frame and the respective occlusion score for the query point in the video frame.

In the example of FIG. 4, the system performs this processing independently for each of the video frames. That is, for a given video frame, the system processes the $h' \times w' \times n$ portion of the cost volume for the given video frame using the decoder neural network to generate the predicted position of the query point within the given video frame and the occlusion score for the query point in the video frame. When the system does not use "heads" when generating the cost volume, $n$ is equal to one and the portion of the cost volume is an $h' \times w' \times 1$ portion.

In particular, in the example of FIG. 4, the decoder neural network includes a set of shared layers and respective branches for position inference and occlusion inference.

The decoder neural network processes the portion of the cost volume for the given video frame using the shared layers, e.g., using a convolutional layer followed by a rectified linear unit (ReLU) activation function layer, to generate a shared output.

For the occlusion inference branch, the decoder neural network processes the shared output using the layers in the occlusion inference branch to generate a single occlusion score ("logit") for the given video frame. For example, in the example of FIG. 4, the occlusion inference branch includes a first set of layers that collapse the shared output into a vector, e.g., using spatial average pooling, followed by a second set of layers that regress the occlusion logit for the given video frame from the single vector. For example, the second set of layers can include a linear layer, a Leaky ReLU, and another linear layer which produces a single logit. A Leaky ReLU may be a ReLU activation function that has a slope (e.g. a relatively small slope, such as a slope of 0.01) for negative values (e.g. opposed to a flat slope for negative values).

For the position inference branch, the system can apply a set of layers, e.g., a convolutional (Conv) layer with a single output, followed by a spatial softmax, to generate a respective score for each spatial location in the video frame.

The system can then compute a "soft argmax" to compute the position from the respective scores.

To compute the soft argmax, the system can identify the spatial location with the highest score, i.e., the "argmax" location, according the respective scores for the spatial locations. The system can then identify each spatial location that is within a fixed size window $B$ of the spatial location with the highest score, i.e., the argmax location and then determine the predicted position by computing a weighted average.

That is, the system determines the predicted position by computing a weighted sum of the spatial locations within the fixed sized window of the argmax spatial location, with the weight for each spatial location being computed based on, e.g., equal to or directly proportional to, the ratio between the score for the spatial location and a sum of the scores for the spatial locations within the fixed size window.

Optionally, once the system has computed the predicted positions and occlusion estimates independently for each video frame for a given query point as described above, the system can then iteratively refine the initial trajectory of predicted positions and occlusion estimates in the video frame using an iterative refinement technique to generate final predicted positions and occlusion estimates. For example, the system can apply an iterative refinement technique that, given an initialization, searches over a local neighborhood and smooths the track, i.e., the trajectory of positions and occlusion estimates, over time. For example, the system can use the predicted positions and occlusion estimates described above as the initialization for a Persistent Independent Particles (PIPs) search. PIPs is described in more detail in Adam W Harley, Zhaoyuan Fang, and Katerina Fragkiadaki. Particle video revisited: Tracking through occlusions using point trajectories. In Proceedings of European Conference on Computer Vision (ECCV), pages 59-75. Springer, 2022.

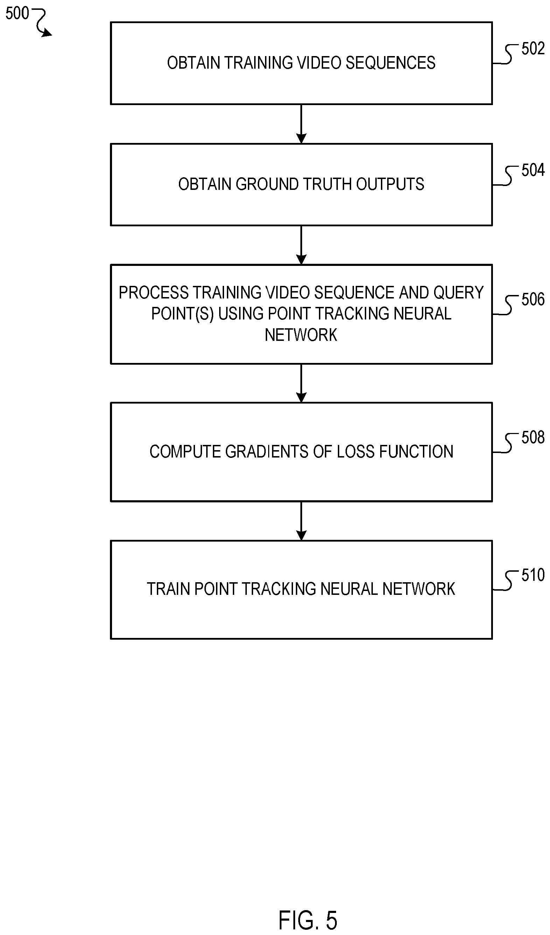

FIG. 5 is a flow diagram of an example process 500 for training the point tracking neural network. For convenience, the process 500 will be described as being performed by a system of one or more computers located in one or more locations. For example, a video processing system, e.g., the video processing system 100 depicted in FIG. 1, appropriately programmed in accordance with this specification, can perform the process 500.

The system can repeatedly perform iterations of the process 500 on different batches of training videos to update the parameters of the point tracking neural network.

That is, at each iteration of the process 500, the system obtains a batch of training videos, e.g., by sampling the batch from a larger set of training data, and uses the batch of one or more training videos to update the parameters of the neural network.

The system can continue performing iterations of the process 500 until termination criteria for the training of the neural network have been satisfied, e.g., until the parameters have converged, until a threshold amount of wall clock time has elapsed, or until a threshold number of iterations of the process 500 have been performed.

The system obtains a batch of one or more training video sequences (step 502).

The system obtains, for each training video sequence and each query point in a set of query points for the training video sequence, (i) a ground truth spatial position of the query point in each of the video frames in the training video sequence and (ii) a respective ground truth occlusion score for the query point for each of the video frames in the training video sequence (step 504).

For each training video sequence, the system processes the set of one or more query points for the training video sequence and the training video sequence using the point tracking neural network to generate, for each query point, a respective predicted spatial position of the query point in each of the video frames in the training video sequence and a respective occlusion score for the query point for each of the video frames in the training video sequence (step 506), e.g., as described above with reference to FIGS. 1-4.

The system computes, e.g., through backpropagation, gradients with respect to the parameters of the point tracking neural network of a loss function (step 508).

Generally, the loss function includes a set of supervising learning terms that make use of the ground truth spatial positions and the ground truth occlusion scores.

In particular, the supervising learning terms include (i) a first loss term that measures, for each training video sequence, errors between ground truth spatial positions of query points and corresponding predicted spatial positions of query points and (ii) a second loss term that measures, for each training video sequence, errors between ground truth occlusion scores for query points and corresponding predicted occlusion scores for the query points.

For example, the first loss term can be based on a Huber loss and the second term can be a cross-entropy loss.

As a particular example, the loss function $L$ for a given query point in a given video sequence can satisfy:

$$L = \sum_t \left(1 - o_t^{gt}\right) L_H\left(\hat{p}_t, p_t^{gt}\right) - \lambda CE\left(\hat{o}_t, o_t^{gt}\right),$$

where $t$ is the number of video frames in the video, $o_t^{gt}$ is the ground truth occupancy for video frame $t$, $p_t^{gt}$ is the ground truth position of the query point in video frame $t$, $\hat{o}_t^{gt}$ is the predicted occupancy for video frame $t$, $p_t^{gt}$ is the predicted position of the query point in video frame $t$, $L_H\left(\hat{p}_t, p_t^{gt}\right)$ is the Hubert loss between $\hat{p}_t$ and $p_t^{gt}$, $\lambda$ is a weight value that can be provided as input to the system or determined through a hyperparameter sweep, and $CE\left(\hat{o}_t, o_t^{gt}\right)$ is the cross-entropy loss between $\hat{o}_t$ and $o_t^{gt}$ that satisfies:

$$\log(\hat{o}_t) o_t^{gt} + \log(1 - \hat{o}_t)(1 - o_t^{gt}).$$

In some implementations, the loss function also includes a set of auxiliary loss terms.

For example, the set of auxiliary loss terms can also include a contrastive loss term. For example, the contrastive term can encourage similarity for features that correspond to the same query point and dissimilarity between features that do not correspond to the same query point.

The system trains the neural network using the computed gradients (step 510). That is, the system updates the current values of the network parameters using the gradients.

Generally, the system updates the current values by applying an optimizer to the current values of the network parameters using the gradients to generate updated values for the network parameters. The optimizer can be any appropriate neural network training optimizer, e.g., Adam, Adafactor, rmsProp, and so on. The optimizer may aim to adjust (optimize) the values of the network parameters to minimize the loss from the loss function.

In some implementations, the system also uses self-supervised learning to train the point tracking neural network on unlabeled training video sequences. In these implementations, for some iterations of the process 500, rather than obtaining the ground truth outputs from an external source, the system can generate the ground-truth occlusion and predicted point outputs using the neural network (to provide a form of self-supervision). For example, the system can train using self-supervised learning for an initial number of iterations of the process 500 before training using supervised learning, can interleave self-supervised iterations among supervised iterations, or can repeatedly perform a self-supervised iteration in parallel with a supervised iteration and then update the current values of the parameters using an average of the gradients computed for the two iterations.

In particular, to generate the ground truth outputs for a given training video sequence, the system can obtain another training video sequence that is a variation of the training video sequence. For example, the system can generate both training video sequences by applying different data augmentations to an original unlabeled training video sequence, e.g., so that both training sequences are different "views" of the same original training video sequence.

The system can then process the set of one or more query points and the other training video sequence using the point tracking neural network to generate, for each query point, a respective predicted spatial position of the query point in each of the video frames in the other training video sequence and a respective occlusion score for the query point for each of the video frames in the other training video sequence, e.g., as described above.

The system can then generate the ground truth spatial positions of the query points in each of the video frames in the training video sequence and the respective ground truth occlusion scores for the query points for each of the video frames from data generated by the point tracking neural network while processing the set of one or more query points and the other training video sequence using the point tracking neural network.

For example, the system can process the data generated by the point tracking neural network while processing the set of one or more query points and the other training video sequence using a predictor neural network to predict the ground truth spatial positions and ground truth occlusion scores. The predictor neural network can be, e.g., a multi-layer perceptron (MLP) or other appropriate neural network architecture.

The data generated by the point tracking neural network while processing the set of one or more query points and the other training video sequence using the point tracking neural network can include the (i) the respective predicted spatial positions of the query points in the video frames in the other training video sequence and (ii) the respective occlusion scores for the query points for each of the video frames in the other training video sequence. For example, the data can be a concatenation of (i) and (ii) into a single vector according to a predetermined order. Thus, the predictor neural network "projects" the prediction generated by the point tracking neural network to generate a different projection that serves as the ground truth for training.

The system can obtain the data set that is used obtain the training video sequences and the ground truth positions and occlusion scores in any of a variety of ways.

In some implementations, given a training video sequence, users can manually label the positions of a given query point in all of the frames of the video frame.

In some other implementations, the system can generate the data set using a hybrid approach in which users provide the positions of the query point at a subset of frames in the training video sequence and the system uses optical flow estimates to generate the positions of the query point in the other video frames. An optical flow estimate between two frames in a video specifies, for each pixel in the first frame, a location of that pixel in the second frame. That is, optical flow is a pixel-level estimate of the motion of pixels in the first frame to the second frame. For example, the optical flow estimate can include an optical flow vector for each pixel in the first frame that is an estimate of the motion of the pixel between the first frame and the second frame.

One example of using optical flow estimates to generate a training example that includes a training video sequence and positions of an initial point in some or all of the frames in the training video sequence follows.

The system obtains a video sequence that includes a sequence of video frames.

The system generates an optical flow estimate for the video sequence. For example, the system can process the video sequence using an optical flow prediction neural network to generate the estimate. As described above, the optical flow estimate can specify, for each of multiple pairs of video frames in the video sequence, a predicted position of each pixel in the first frame in the pair in the second frame in the pair. For example, the optical prediction neural network can have been trained through unsupervised learning on a large data set of training video sequences. One example of such a neural network is described in Teed, Z., Deng, J.: Raft: Recurrent all-pairs field transforms for optical flow. In: European conference on computer vision. pp. 402-419. Springer (2020).

The system obtains an input specifying an initial point at an initial position in a first video frame of the sequence and a target position in a second, later video frame that represents a spatial position of the initial point in the second, later video frame.

For example, the system can obtain a first user input specifying the initial point at the initial position in the first video frame of the sequence and then obtain a second user input specifying the target position in the second, later video frame that represents the spatial position of the initial point in the second, later video frame. That is, a user can submit inputs annotating the video sequence in order to identify the initial and target positions.

As a particular example, prior to obtaining the first and second user inputs, the system can obtain a third user input identifying a bounding box within the first video frame that depicts an object and then receive a user input selecting one of the points within the bounding box as the initial point.

The system generates, using the optical flow estimate, a respective target position of the initial point in each video frame that is between the first video frame and the second video frame in the sequence.

In particular, the system can generate, using the optical flow estimate, a predicted path from the initial position in the first video frame to the final position in the second video frame using the optical flow path, wherein the predicted path includes a respective position in each of the video frames that are between the first video frame and the second video frame in the sequence. The system can then use, as the target positions, the points in the path.

For example, to generate the predicted path, the system can generate a path from the initial position in the first video frame to the final position in the second video frame that minimizes a discrepancy with the optical flow estimate. For example, the discrepancy between a given path and the optical flow estimate can be the squared discrepancy, i.e., the sum of, for each of the video frames that are between the first video frame and the second video frame in the sequence, the squared distance between (i) the delta between position in the path in the video frame and the position in the path in the preceding video frame and (ii) the optical flow vector for the preceding video frame.

In some implementations, to find the path that minimizes the discrepancy, the system can identify a shortest path from a first node representing the initial position in the first video frame to a second node representing the final position in the second video frame in a graph that includes (i) a respective node for each of a plurality of pixels in a plurality of frames that comprise the first frame, the second frame, and each frame between the first and second frame in the video sequence and (ii) for the first frame and each frame between the first and second frame in the video sequence, a respective edge between each particular pixel of the plurality of pixels in the frame and each particular pixel of the plurality of pixels in a subsequent frame that is weighted by a discrepancy between a path from the particular pixel in the frame and the particular pixel in the subsequent frame and the optical flow estimate, e.g., the squared discrepancy, the squared distance between (i) the delta between the particular pixel in the subsequent frame and the particular pixel in the frame and (ii) the optical flow vector for the particular pixel in the frame. For example, the system can efficiently identify this shortest using a form of Dijkstra's algorithm.

Optionally, the user can be given the option to modify the target positions generated by the system, e.g., the option to 'split' unsatisfactory paths, by adding more points that become new endpoints for another iteration of the optical flow-estimate guided generation.

Table 1

| Method | Kinetics | | | Kubric | | | DAVIS | | | RGB-Stacking | | |
|---|---|---|---|---|---|---|---|---|---|---|---|---|
| | AJ | $< \delta_{avg}^x$ | OA | AJ | $< \delta_{avg}^x$ | OA | AJ | $< \delta_{avg}^x$ | OA | AJ | $< \delta_{avg}^x$ | OA |
| COTR [41] | 14.6 | 34.1 | 57.8 | 40.0 | 60.7 | 78.5 | 35.4 | 51.3 | 80.2 | 6.78 | 13.4 | 79.1 |
| RAFT [82] | 29.7 | 46.4 | 78.2 | 28.4 | 37.7 | 82.6 | 31.2 | 47.2 | 81.0 | 23.7 | 36.9 | 79.5 |
| Kubric-VEFS-Like [28] | 23.1 | 49.9 | 62.8 | 49.5 | 68.7 | 80.5 | 23.1 | 44.7 | 61.6 | 39.4 | 59.4 | 76.1 |
| TAP-Net (Ours) | **42.8** | **56.6** | **84.5** | **62.7** | **76.0** | **91.6** | **39.0** | **53.3** | **82.2** | **52.1** | **65.9** | **83.9** |

Table 1 shows the performance of the described techniques (TAP-Net) relative to three baselines: a) a baseline based on COTR: Correspondence transformer for matching across images, b) a baseline based on an extension to RAFT, c) a baseline based on VFS.

The performance is shown for four video data sets, (Kinetics, Kubric, DAVIS, and RGB-Stacking) and for three metrics. As can be seen in Table 1, the described techniques outperform all three baselines on all four data sets, both in predicting occlusions and, more generally, in accurately tracking points.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. With reference to particular neural networks, a neural network may be configured to perform a particular action by being trained to perform that particular action.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, e.g., inference, workloads.

Machine learning models can be implemented and deployed using a machine learning framework, .e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the processes depicted in the accompanying figures do not necessarily require the particular order shown, or sequential order, to achieve desirable results. In some cases, multitasking and parallel processing may be advantageous.

**Claims**

1. A method performed by one or more computers, the method comprising:

   obtaining (202) a video sequence (102) comprising a plurality of video frames;
   obtaining (204) a set of one or more query points (104), each query point specifying a respective spatial position in a corresponding one of the plurality of video frames; and
   processing (206) the set of one or more query points and the video sequence using a point tracking neural network (110) to generate a network output that comprises, for each query point, a respective predicted spatial position of the query point in each of the video frames in the sequence other than the corresponding video frame for the query point and a respective occlusion score for the query point for each of the video frames other than the corresponding video frame that represents a likelihood that the query point is occluded in the video frame,
   wherein processing the set of one or more query points and the video sequence using a point tracking neural network to generate a network output that comprises, for each query point, a respective predicted spatial position of the query point in each of the video frames in the sequence other than the corresponding video frame for the query point comprises:

   processing the video frames in the video sequence using a visual backbone neural network to generate a feature grid that includes a respective visual feature for each of a plurality of spatial locations in each of the video frames;
   for each query point:

   generating an extracted feature for the query point from the spatial position of the query point in the corresponding video frame and the respective visual features for one or more of the plurality of spatial locations in the corresponding video frame; and
   generating the respective predicted spatial position of the query point in each of the video frames other than the corresponding video frame from the feature grid and the extracted feature for the query point,

   wherein generating the respective predicted spatial position of the query point in each of the video frames other than the corresponding video frame from the feature grid and the extracted feature for the query point comprises:

   generating a cost volume from the feature grid and the extracted feature for the query point;
   processing the cost volume using a decoder neural network to generate, for each of the plurality of video frames other than the corresponding video frame, a respective score for each spatial location in the video frame;
   for each of the plurality of video frames other than the corresponding video frame, generating the predicted position from the respective scores for the spatial locations in the video frame; and
   processing the cost volume using the decoder neural network to generate, for each video frame other than the corresponding video frame, the respective occlusion score for the query point in the video frame.

2. The method of claim 1, wherein generating an extracted feature for the query point from the spatial position of the query point in the corresponding video frame and the respective visual features for each of the plurality of spatial locations in the corresponding video frame comprises:
   performing an interpolation of the visual features of a set of spatial locations that are within a local neighborhood of the respective spatial position of the query in the corresponding video frame.

3. The method of claim 1 or claim 2, wherein generating the predicted position from the respective scores comprises:

   identifying the spatial location with the highest score;
   identifying each spatial location that is within a fixed size window of the spatial location with the highest score; and
   determining the predicted position by computing a weighted sum of the spatial locations within the fixed sized window of the spatial location with the highest score, wherein the weight for each spatial location is computed based on the score for the spatial location and a sum of the scores for the spatial locations within the fixed size window.

4. A method of training the point tracking neural network (110) of any preceding claim, the method comprising:

   obtaining (502) a batch of one or more training video sequences (102);

obtaining (504), for each training video sequence and each query point in a set of query (104) for the training video sequence, (i) a ground truth spatial position of the query point in each of the video frames in the training video sequence and (ii) a respective ground truth occlusion score for the query point for each of the video frames in the training video sequence;

for each training video sequence, processing (506) the set of one or more query points for the training video sequence and the training video sequence using the point tracking neural network to generate, for each query point, a respective predicted spatial position of the query point in each of the video frames in the training video sequence and a respective occlusion score for the query point for each of the video frames in the training video sequence;

computing gradients (508) with respect to the parameters of the point tracking neural network of a loss function that includes:

(i) a first loss term that measures, for each training video sequence, errors between ground truth spatial positions of the query points and corresponding predicted spatial positions of the query points, and
(ii) a second loss term that measures, for each training video sequence, errors between ground truth occlusion scores for query points and corresponding predicted occlusion scores for the query points.

5. The method of claim 4, wherein the first loss term is a Huber loss.

6. The method of claim 4 or claim 5, wherein the second loss term is a cross-entropy loss.

7. The method of any one of claims 4-6, wherein the loss function also includes:
(iii) a contrastive learning loss term.

8. The method of any one of claims 4-7, further comprising:
for each of one or more of the training video sequences, generating the ground truth spatial position of the query point in each of the video frames in the training video sequence and the respective ground truth occlusion score for the query point for each of the video frames, comprising:

obtaining another training video sequence that is a variation of the training video sequence;
processing the set of one or more query points and the other training video sequence using the point tracking neural network to generate, for each query point, a respective predicted spatial position of the query point in each of the video frames in the other training video sequence and a respective occlusion score for the query point for each of the video frames in the other training video sequence; and
generating the ground truth spatial positions of the query points in each of the video frames in the training video sequence and the respective ground truth occlusion scores for the query points for each of the video frames from data generated by the point tracking neural network while processing the set of one or more query points and the other training video sequence using the point tracking neural network.

9. The method of claim 8, wherein generating the ground truth spatial position of the query points in each of the video frames in the training video sequence and the respective ground truth occlusion score for the query points for each of the video frames from data generated by the point tracking neural network while processing the set of one or more query points and the other training video sequence using the point tracking neural network comprises:
processing the data generated by the point tracking neural network while processing the set of one or more query points and the other training video sequence using the point tracking neural network using a predictor neural network.

10. The method of claim 9, wherein the predictor neural network is a multi-layer perceptron (MLP).

11. The method of any one of claims 8-10, wherein the training video sequence and the other training video sequence have been generated from a same original training video sequence by applying different data augmentations to the original training video sequence.

12. The method of any one of claims 8-11, wherein the data generated by the point tracking neural network while processing the set of one or more query points and the other training video sequence using the point tracking neural network comprises:

(i) the respective predicted spatial positions of the query points in the video frames in the other training video sequence, and

(ii) the respective occlusion scores for the query points for each of the video frames in the other training video sequence.

13. The method of any one of claims 4-12, further comprising:

training (510) the point tracking neural network using the computed gradients.

14. A system (100) comprising one or more computers and one or more storage devices storing instructions that when executed by the one or more computers cause the one more computers to perform the operations of the respective method of any one of claims 1-13.

15. One or more computer storage media storing instructions that when executed by one or more computers cause the one more computers to perform the operations of the respective method of any one of claims 1-13.

**Patentansprüche**

1. Verfahren, das von einem oder mehreren Computern durchgeführt wird, wobei das Verfahren umfasst:

Erlangen (202) einer Videosequenz (102), umfassend eine Vielzahl von Videoframes;
Erlangen (204) eines Satzes von einem oder mehreren Abfragepunkten (104), wobei jeder Abfragepunkt eine jeweilige räumliche Position in einem entsprechenden eines von der Vielzahl von Videoframes definiert; und
Verarbeiten (206) des Satzes von einem oder mehreren Abfragepunkten und der Videosequenz unter Verwendung eines neuronalen Punktverfolgungsnetzwerks (110), um eine Netzwerkausgabe zu erzeugen, die für jeden Abfragepunkt eine jeweilige vorhergesagte räumliche Position des Abfragepunkts in jedem der Videoframes in der Sequenz außer dem entsprechenden Videoframe für den Abfragepunkt und einen jeweiligen Verdeckungsscore für den Abfragepunkt für jeden der Videoframes außer dem entsprechenden Videoframe umfasst, der eine Wahrscheinlichkeit repräsentiert, dass der Abfragepunkt in dem Videoframe verdeckt ist, wobei Verarbeiten des Satzes von einem oder mehreren Abfragepunkten und der Videosequenz unter Verwendung eines neuronalen Punktverfolgungsnetzwerks, um eine Netzwerkausgabe zu erzeugen, die für jeden Abfragepunkt eine jeweilige vorhergesagte räumliche Position des Abfragepunkts in jedem der Videoframes in der Sequenz außer dem entsprechenden Videoframe für den Abfragepunkt umfasst, umfasst:

Verarbeiten der Videoframes in der Videosequenz unter Verwendung eines visuellen neuronalen Backbone-Netzwerks, um ein Merkmalsgitter zu erzeugen, das ein jeweiliges visuelles Merkmal für jeden einer Vielzahl von räumlichen Orten in jedem der Videoframes beinhaltet;
für jeden Abfragepunkt:

Erzeugen eines extrahierten Merkmals für den Abfragepunkt aus der räumlichen Position des Abfragepunkts in dem entsprechenden Videoframe und den jeweiligen visuellen Merkmalen für einen oder mehrere der Vielzahl von räumlichen Orten in dem entsprechenden Videoframe; und
Erzeugen der jeweiligen vorhergesagten räumlichen Position des Abfragepunkts in jedem der Videoframes außer dem entsprechenden Videoframe aus dem Merkmalsgitter und dem extrahierten Merkmal für den Abfragepunkt,
wobei Erzeugen der jeweiligen vorhergesagten räumlichen Position des Abfragepunkts in jedem der Videoframes außer dem entsprechenden Videoframe aus dem Merkmalsgitter und dem extrahierten Merkmal für den Abfragepunkt umfasst:

Erzeugen eines Kostenvolumens aus dem Merkmalsgitter und dem extrahierten Merkmal für den Abfragepunkt;
Verarbeiten des Kostenvolumens unter Verwendung eines neuronalen Decodernetzwerks, um für jeden der Vielzahl von Videoframes außer dem entsprechenden Videoframe einen jeweiligen Score für jeden räumlichen Ort in dem Videoframe zu erzeugen;
für jeden der Vielzahl von Videoframes außer dem entsprechenden Videoframe, Erzeugen der vorhergesagten Position aus den jeweiligen Scores für die räumlichen Orte in dem Videoframe; und
Verarbeiten des Kostenvolumens unter Verwendung des neuronalen Decodernetzwerks, um für jeden Videoframe außer dem entsprechenden Videoframe den jeweiligen Verdeckungsscore für den Abfragepunkt in dem Videoframe zu erzeugen.

**2.** Verfahren nach Anspruch 1, wobei Erzeugen eines extrahierten Merkmals für den Abfragepunkt aus der räumlichen Position des Abfragepunkts in dem entsprechenden Videoframe und den jeweiligen visuellen Merkmalen für jeden der Vielzahl von räumlichen Orten in dem entsprechenden Videoframe umfasst:

Durchführen einer Interpolation der visuellen Merkmale eines Satzes von räumlichen Orten, die sich innerhalb einer lokalen Nachbarschaft der jeweiligen räumlichen Position der Abfrage in dem entsprechenden Videoframe befinden.

**3.** Verfahren nach Anspruch 1 oder Anspruch 2, wobei Erzeugen der vorhergesagten Position aus den jeweiligen Scores umfasst:

Identifizieren des räumlichen Orts mit dem höchsten Score;
Identifizieren jedes räumlichen Orts, der sich innerhalb eines Fensters fester Größe des räumlichen Orts mit dem höchsten Score befindet; und
Bestimmen der vorhergesagten Position durch Berechnen einer gewichteten Summe der räumlichen Orte innerhalb des Fensters fester Größe des räumlichen Orts mit dem höchsten Score, wobei das Gewicht für jeden räumlichen Ort basierend auf dem Score für den räumlichen Ort und einer Summe der Scores für die räumlichen Orte innerhalb des Fensters fester Größe berechnet wird.

**4.** Verfahren zum Trainieren des neuronalen Punktverfolgungsnetzwerks (110) nach einem der vorhergehenden Ansprüche, wobei das Verfahren umfasst:

Erlangen (502) eines Batches von einer oder mehreren Trainingsvideosequenzen (102);
Erlangen (504), für jede Trainingsvideosequenz und jeden Abfragepunkt in einem Satz von Abfragen (104) für die Trainingsvideosequenz, (i) einer räumlichen Ground-Truth-Position des Abfragepunkts in jedem der Videoframes in der Trainingsvideosequenz und (ii) eines jeweiligen Ground-Truth-Verdeckungsscores für den Abfragepunkt für jeden der Videoframes in der Trainingsvideosequenz;
für jede Trainingsvideosequenz, Verarbeiten (506) des Satzes von einem oder mehreren Abfragepunkten für die Trainingsvideosequenz und der Trainingsvideosequenz unter Verwendung des neuronalen Punktverfolgungsnetzwerks, um für jeden Abfragepunkt eine jeweilige vorhergesagte räumliche Position des Abfragepunkts in jedem der Videoframes in der Trainingsvideosequenz und einen jeweiligen Verdeckungsscore für den Abfragepunkt für jeden der Videoframes in der Trainingsvideosequenz zu erzeugen;
Berechnen von Gradienten (508) in Bezug auf die Parameter des neuronalen Punktverfolgungsnetzwerks einer Verlustfunktion, die beinhaltet:

(i) einen ersten Verlustterm, der für jede Trainingsvideosequenz Fehler zwischen räumlichen Ground-Truth-Positionen der Abfragepunkte und entsprechenden vorhergesagten räumlichen Positionen der Abfragepunkte misst, und
(ii) einen zweiten Verlustterm, der für jede Trainingsvideosequenz Fehler zwischen Ground-Truth-Verdeckungsscores für Abfragepunkte und entsprechenden vorhergesagten Verdeckungsscores für die Abfragepunkte misst.

**5.** Verfahren nach Anspruch 4, wobei der erste Verlustterm ein Huber-Verlust ist.

**6.** Verfahren nach Anspruch 4 oder Anspruch 5, wobei der zweite Verlustterm ein Kreuzentropieverlust ist.

**7.** Verfahren nach einem der Ansprüche 4-6, wobei die Verlustfunktion auch beinhaltet:
(iii) einen kontrastiven Lernverlustterm.

**8.** Verfahren nach einem der Ansprüche 4-7, ferner umfassend:
für jede einer oder mehrerer der Trainingsvideosequenzen, Erzeugen der räumlichen Ground-Truth-Position des Abfragepunkts in jedem der Videoframes in der Trainingsvideosequenz und des jeweiligen Ground-Truth-Verdeckungsscores für den Abfragepunkt für jeden der Videoframes, umfassend:

Erlangen einer anderen Trainingsvideosequenz, die eine Variation der Trainingsvideosequenz ist;
Verarbeiten des Satzes von einem oder mehreren Abfragepunkten und der anderen Trainingsvideosequenz unter Verwendung des neuronalen Punktverfolgungsnetzwerks, um für jeden Abfragepunkt eine jeweilige vorhergesagte räumliche Position des Abfragepunkts in jedem der Videoframes in der anderen Trainingsvideosequenz und einen jeweiligen Verdeckungsscore für den Abfragepunkt für jeden der Videoframes in der anderen Trainingsvideosequenz zu erzeugen; und

Erzeugen der räumlichen Ground-Truth-Positionen der Abfragepunkte in jedem der Videoframes in der Trainingsvideosequenz und der jeweiligen Ground-Truth-Verdeckungsscores für die Abfragepunkte für jeden der Videoframes aus Daten, die von dem neuronalen Punktverfolgungsnetzwerk während des Verarbeitens des Satzes von einem oder mehreren Abfragepunkten und der anderen Trainingsvideosequenz unter Verwendung des neuronalen Punktverfolgungsnetzwerks erzeugt wurden.

9. Verfahren nach Anspruch 8, wobei Erzeugen der räumlichen Ground-Truth-Position der Abfragepunkte in jedem der Videoframes in der Trainingsvideosequenz und des jeweiligen Ground-Truth-Verdeckungsscores für die Abfragepunkte für jeden der Videoframes aus Daten, die von dem neuronalen Punktverfolgungsnetzwerk während des Verarbeitens des Satzes von einem oder mehreren Abfragepunkten und der anderen Trainingsvideosequenz unter Verwendung des neuronalen Punktverfolgungsnetzwerks erzeugt wurden, umfasst:
Verarbeiten der Daten, die von dem neuronalen Punktverfolgungsnetzwerk während des Verarbeitens des Satzes von einem oder mehreren Abfragepunkten und der anderen Trainingsvideosequenz unter Verwendung des neuronalen Punktverfolgungsnetzwerks erzeugt wurden, unter Verwendung eines neuronalen Prädiktornetzwerks.

10. Verfahren nach Anspruch 9, wobei das neuronale Prädiktornetzwerk ein Mehrschichtperzeptron (MLP - multi-layer perceptron) ist.

11. Verfahren nach einem der Ansprüche 8-10, wobei die Trainingsvideosequenz und die andere Trainingsvideosequenz aus einer gleichen ursprünglichen Trainingsvideosequenz durch Anwenden unterschiedlicher Datenaugmentierungen auf die ursprüngliche Trainingsvideosequenz erzeugt worden sind.

12. Verfahren nach einem der Ansprüche 8-11, wobei die durch das neuronale Punktverfolgungsnetzwerk beim Verarbeiten des Satzes von einem oder mehreren Abfragepunkten und der anderen Trainingsvideosequenz unter Verwendung des neuronalen Punktverfolgungsnetzwerks erzeugten Daten umfassen:

(i) die jeweiligen vorhergesagten räumlichen Positionen der Abfragepunkte in den Videoframes in der anderen Trainingsvideosequenz, und
(ii) die jeweiligen Verdeckungsscores für die Abfragepunkte für jeden der Videoframes in der anderen Trainingsvideosequenz.

13. Verfahren nach einem der Ansprüche 4-12, ferner umfassend: Trainieren (510) des neuronalen Punktverfolgungsnetzwerks unter Verwendung der berechneten Gradienten.

14. System (100), umfassend einen oder mehrere Computer und eine oder mehrere Speichervorrichtungen, die Anweisungen speichern, die, wenn sie durch den einen oder die mehreren Computer ausgeführt werden, bewirken, dass der eine oder die mehreren Computer die Vorgänge des jeweiligen Verfahrens nach einem der Ansprüche 1-13 durchführen.

15. Ein oder mehrere Computerspeichermedien, die Anweisungen speichern, die, wenn sie durch einen oder mehrere Computer ausgeführt werden, bewirken, dass der eine oder die mehreren Computer die Vorgänge des jeweiligen Verfahrens nach einem der Ansprüche 1-13 durchführen.


**Revendications**

1. Procédé réalisé par un ou plusieurs ordinateurs, le procédé comprenant :

l'obtention (202) d'une séquence vidéo (102) comprenant une pluralité d'images vidéo ;
l'obtention (204) d'un ensemble d'un ou plusieurs points d'interrogation (104), chaque point d'interrogation spécifiant une position spatiale respective dans une image vidéo correspondante de la pluralité d'images vidéo ; et
le traitement (206) de l'ensemble d'un ou plusieurs points d'interrogation et de la séquence vidéo à l'aide d'un réseau neuronal de suivi de points (110) pour générer une sortie de réseau qui comprend, pour chaque point d'interrogation, une position spatiale prédite respective du point d'interrogation dans chacune des images vidéo de la séquence autre que l'image vidéo correspondante pour le point d'interrogation et un score d'occlusion respectif pour le point d'interrogation pour chacune des images vidéo autres que l'image vidéo correspondante qui représente une probabilité que le point d'interrogation soit masqué dans l'image vidéo,

dans lequel le traitement de l'ensemble d'un ou plusieurs points d'interrogation et de la séquence vidéo à l'aide d'un réseau neuronal de suivi de points pour générer une sortie de réseau qui comprend, pour chaque point d'interrogation, une position spatiale prédite respective du point d'interrogation dans chacune des images vidéo de la séquence autre que l'image vidéo correspondante pour le point d'interrogation comprend :

le traitement des images vidéo de la séquence vidéo à l'aide d'un réseau neuronal d'ossature visuelle pour générer une grille de caractéristiques qui comporte une caractéristique visuelle respective pour chacun d'une pluralité d'emplacements spatiaux dans chacune des images vidéo ;
pour chaque point d'interrogation :

la génération d'une caractéristique extraite pour le point d'interrogation à partir de la position spatiale du point d'interrogation dans l'image vidéo correspondante et des caractéristiques visuelles respectives pour l'un ou plusieurs de la pluralité d'emplacements spatiaux dans l'image vidéo correspondante ; et
la génération de la position spatiale prédite respective du point d'interrogation dans chacune des images vidéo autres que l'image vidéo correspondante à partir de la grille de caractéristiques et de la caractéristique extraite pour le point d'interrogation,
dans lequel la génération de la position spatiale prédite respective du point d'interrogation dans chacune des images vidéo autres que l'image vidéo correspondante à partir de la grille de caractéristiques et de la caractéristique extraite pour le point d'interrogation comprend :

la génération d'un volume de coût à partir de la grille de caractéristiques et de la caractéristique extraite pour le point d'interrogation ;
le traitement du volume de coût à l'aide d'un réseau neuronal décodeur pour générer, pour chacune de la pluralité d'images vidéo autres que l'image vidéo correspondante, un score respectif pour chaque emplacement spatial dans l'image vidéo ;
pour chacune de la pluralité d'images vidéo autres que l'image vidéo correspondante, la génération de la position prédite à partir des scores respectifs des emplacements spatiaux dans l'image vidéo ; et
le traitement du volume de coût à l'aide du réseau neuronal décodeur pour générer, pour chaque image vidéo autre que l'image vidéo correspondante, le score d'occlusion respectif pour le point d'interrogation dans l'image vidéo.

2. Procédé selon la revendication 1, dans lequel la génération d'une caractéristique extraite pour le point d'interrogation à partir de la position spatiale du point d'interrogation dans l'image vidéo correspondante et des caractéristiques visuelles respectives pour chacun de la pluralité d'emplacements spatiaux dans l'image vidéo correspondante comprend :
la réalisation d'une interpolation des caractéristiques visuelles d'un ensemble d'emplacements spatiaux qui se trouvent dans un voisinage local de la position spatiale respective de l'interrogation dans l'image vidéo correspondante.

3. Procédé selon la revendication 1 ou la revendication 2, dans lequel la génération de la position prédite à partir des scores respectifs comprend :

L'identification de l'emplacement spatial avec le score le plus élevé ;
l'identification de chaque emplacement spatial qui se trouve dans une fenêtre de taille fixe de l'emplacement spatial avec le score le plus élevé ; et
la détermination de la position prédite en calculant une somme pondérée des emplacements spatiaux se trouvant dans la fenêtre de taille fixe de l'emplacement spatial avec le score le plus élevé, dans lequel le poids de chaque emplacement spatial est calculé sur la base du score de l'emplacement spatial et d'une somme des scores des emplacements spatiaux se trouvant dans la fenêtre de taille fixe.

4. Procédé d'entraînement du système de réseau neuronal de suivi de points (110) selon une quelconque revendication précédente, le procédé comprenant :

l'obtention (502) d'un lot d'une ou plusieurs séquences vidéo d'entrainement (102) ;
l'obtention (504), pour chaque séquence vidéo d'entraînement et chaque point d'interrogation dans un ensemble d'interrogations (104) pour la séquence vidéo d'entraînement, (i) d'une position spatiale de vérité terrain du point d'interrogation dans chacune des images vidéo de la séquence vidéo d'entraînement et (ii) d'un score d'occlusion de vérité terrain respectif pour le point d'interrogation pour chacune des images vidéo de la séquence vidéo d'entraînement ;

pour chaque séquence vidéo d'entraînement, le traitement (506) de l'ensemble d'un ou plusieurs points d'interrogation pour la séquence vidéo d'entraînement, et l'utilisation, par la séquence vidéo d'entraînement, du réseau neuronal de suivi de points pour générer, pour chaque point d'interrogation, une position spatiale prédite respective du point d'interrogation dans chacune des images vidéo de la séquence vidéo d'entraînement et un score d'occlusion respectif pour le point d'interrogation pour chacune des images vidéo de la séquence vidéo d'entraînement ;

le calcul de gradients (508) par rapport aux paramètres du réseau neuronal de suivi de points d'une fonction de perte qui comporte :

(i) un premier terme de perte qui mesure, pour chaque séquence vidéo d'entraînement, les erreurs entre les positions spatiales de vérité terrain des points d'interrogation et les positions spatiales prédites correspondantes des points d'interrogation, et

(ii) un second terme de perte qui mesure, pour chaque séquence vidéo d'entraînement, les erreurs entre les scores d'occlusion de vérité terrain pour les points d'interrogation et les scores d'occlusion prédits correspondants pour les points d'interrogation.

5. Procédé selon la revendication 4, dans lequel le premier terme de perte est une perte Huber.

6. Procédé selon la revendication 4 ou la revendication 5, dans lequel le second terme de perte est une perte d'entropie croisée.

7. Procédé selon l'une quelconque des revendications 4 à 6, dans lequel la fonction de perte comporte également :
(iii) un terme de perte d'apprentissage contrastif.

8. Procédé selon l'une quelconque des revendications 4 à 7, comprenant en outre :
pour chacune de l'une ou plusieurs des séquences vidéo d'entraînement, la génération de la position spatiale de vérité terrain du point d'interrogation dans chacune des images vidéo de la séquence vidéo d'entraînement et du score d'occlusion de vérité terrain respectif pour le point d'interrogation pour chacune des images vidéo, comprenant :

l'obtention d'une autre séquence vidéo d'entraînement qui est une variante de la séquence vidéo d'entraînement ;
le traitement de l'ensemble d'un ou plusieurs points d'interrogation et de l'autre séquence vidéo d'entraînement à l'aide du réseau neuronal de suivi de points pour générer, pour chaque point d'interrogation, une position spatiale prédite respective du point d'interrogation dans chacune des images vidéo de l'autre séquence vidéo d'entraînement et un score d'occlusion respectif pour le point d'interrogation pour chacune des images vidéo de l'autre séquence vidéo d'entraînement ; et
la génération des positions spatiales de vérité terrain des points d'interrogation dans chacune des images vidéo de la séquence vidéo d'entraînement et des scores d'occlusion de vérité terrain respectifs pour les points d'interrogation pour chacune des images vidéo à partir des données générées par le réseau neuronal de suivi de points lors du traitement de l'ensemble d'un ou plusieurs points d'interrogation et de l'autre séquence vidéo d'entraînement à l'aide du réseau neuronal de suivi de points.

9. Procédé selon la revendication 8, dans lequel la génération de la position spatiale de vérité terrain des points d'interrogation dans chacune des images vidéo de la séquence vidéo d'entraînement et du score d'occlusion de vérité terrain respectif pour les points d'interrogation pour chacune des images vidéo à partir de données générées par le réseau neuronal de suivi de points lors du traitement de l'ensemble d'un ou plusieurs points d'interrogation et de l'autre séquence vidéo d'entraînement à l'aide du réseau neuronal de suivi de points comprend :
le traitement des données générées par le réseau neuronal de suivi de points lors du traitement de l'ensemble d'un ou plusieurs points d'interrogation et de l'autre séquence vidéo d'entraînement à l'aide du réseau neuronal de suivi de points à l'aide d'un réseau neuronal prédicteur.

10. Procédé selon la revendication 9, dans lequel le réseau neuronal prédicteur est un perceptron multicouche (MLP).

11. Procédé selon l'une quelconque des revendications 8 à 10, dans lequel la séquence vidéo d'entraînement et l'autre séquence vidéo d'entraînement ont été générées à partir d'une même séquence vidéo d'entraînement originale en appliquant différentes augmentations de données à la séquence vidéo d'entraînement originale.

**12.** Procédé selon l'une quelconque des revendications 8 à 11, dans lequel les données générées par le réseau neuronal de suivi de points lors du traitement de l'ensemble d'un ou plusieurs points d'interrogation et de l'autre séquence vidéo d'entraînement à l'aide du réseau neuronal de suivi de points comprennent :

(i) les positions spatiales prédites respectives des points d'interrogation dans les images vidéo de l'autre séquence vidéo d'entraînement, et
(ii) les scores d'occlusion respectifs pour les points d'interrogation pour chacune des images vidéo de l'autre séquence vidéo d'entraînement.

**13.** Procédé selon l'une quelconque des revendications 4 à 12, comprenant en outre :
l'entraînement (510) du réseau neuronal de suivi de points à l'aide des gradients calculés.

**14.** Système (100) comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser les opérations du procédé respectif selon l'une quelconque des revendications 1 à 13.

**15.** Un ou plusieurs supports de stockage informatique stockant des instructions qui, lorsqu'elles sont exécutées par un ou plusieurs ordinateurs, amènent les un ou plusieurs ordinateurs à réaliser les opérations du procédé respectif selon l'une quelconque des revendications 1 à 13.

VIDEO SEQUENCE
102

QUERY POINT(S)
104

NETWORK OUTPUT
112

PREDICTED
POSITIONS
114

OCCLUSION
SCORES
116

VIDEO PROCESSING
SYSTEM
100

POINT TRACKING
NEURAL NETWORK 110

FIG. 1

200

```
┌──────────────────────────────────────────────┐
│                                                │
│           OBTAIN VIDEO SEQUENCE                │  ⌐202
│                                                │
└──────────────────────────────────────────────┘
                        │
                        ▼
┌──────────────────────────────────────────────┐
│                                                │
│     OBTAIN A SET OF ONE OR MORE QUERY POINTS   │  ⌐204
│                                                │
└──────────────────────────────────────────────┘
                        │
                        ▼
┌──────────────────────────────────────────────┐
│    PROCESS THE VIDEO AND THE QUERY POINT(S)    │
│    USING POINT TRACKING NEURAL NETWORK TO      │  ⌐206
│        GENERATE NETWORK OUTPUT                 │
└──────────────────────────────────────────────┘
```

FIG. 2

FIG. 3

cost volume

$h' \times w'$

$n$

conv relu

conv avg. pool sqrt

$1 \times 1 \times n$

linear L-relu linear

occlusion logit

conv softmax

$h' \times w' \times 1$

argmax

weighted avg. within $B$

$B$

predicted $(x, y)$

400

FIG. 4

500

OBTAIN TRAINING VIDEO SEQUENCES — 502

OBTAIN GROUND TRUTH OUTPUTS — 504

PROCESS TRAINING VIDEO SEQUENCE AND QUERY POINT(S) USING POINT TRACKING NEURAL NETWORK — 506

COMPUTE GRADIENTS OF LOSS FUNCTION — 508

TRAIN POINT TRACKING NEURAL NETWORK — 510

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63317535

**Non-patent literature cited in the description**

- **SU LIHUI et al.** Siamese Network-Based All-Purpose-Tracker, a Model-Free Deep Learning Tool for Animal Behavioral Tracking. *FRONTIERS IN BEHAVIORAL NEUROSCIENCE*, 04 March 2022, vol. 16
- COTR: Correspondence Transformer for Matching Across Images. **JIANG WEI et al.** 2021 IEEE/CVF INTERNATIONAL CONFERENCE ON COMPUTER VISION (ICCV). IEEE, 10 October 2021, 6187-6197
- Particle video revisited: Tracking through occlusions using point trajectories. **ADAM W HARLEY** ; **ZHAOYUAN FANG** ; **KATERINA FRAGKIADAKI**. In Proceedings of European Conference on Computer Vision (ECCV). Springer, 2022, 59-75
- Raft: Recurrent all-pairs field transforms for optical flow.. **TEED, Z** ; **DENG, J.** In: European conference on computer vision.. Springer, 2020, 402-419